# EUROPÄISCHE PATENTSCHRIFT

(11) **EP 1 229 257 B1**
(45) Veröffentlichungstag und Bekanntmachung des Hinweises auf die Patenterteilung: **07.01.2004**
(21) Anmeldenummer: 02002344.6
(22) Anmeldetag: 31.01.2002
(51) Int. Cl.: F16B 41/00, F16B 35/06, F16B 5/02

(54) **Montageeinheit aus einem Bauteil und mindestens einer Schraube**
Mounting device made of a part to be mounted and at least one screw
Dispositif d'assemblage constitué par une pièce à assembler et au moins une vis

(30) Priorität: 02.02.2001 DE 10104672
(43) Veröffentlichungstag der Anmeldung: 07.08.2002
(73) Patentinhaber: Kamax-Werke Rudolf Kellermann GmbH & Co. KG, 37520 Osterode am Harz (DE)
(72) Erfinder: Braun, Mario, Dipl.-Ing., 35325 Mücke (DE); Sommer, Wolfgang, Dipl.-Ing., 35285 Gemünden/Wohra (DE); Wagner, Frank, Dipl.-Ing., 35418 Grossen Buseck (DE)
(74) Vertreter: Patentanwälte Rehberg + Hüppe

(56) Entgegenhaltungen:
- EP-A- 0 942 164
- WO-A-95/21335
- DE-A- 19 651 838

## Beschreibung

Die Erfindung betrifft eine Montageeinheit aus einem Bauteil und mindestens einer Schraube sowie einer jeder Schraube zugeordneten Hülse, wobei das Bauteil für jede Schraube je ein Durchgangsloch aufweist, jede Schraube einen der Betätigung dienenden Kopf mit einer dem Bauteil zugekehrten Auflagefläche und einen zumindest teilweise mit einem Gewinde versehenen Schaft besitzt und die Hülse in das Durchgangsloch einführbar ausgebildet und mit der Schraube und dem Bauteil verliersicher verbunden ist. Die Montageeinheit ist insbesondere für dickwandige Bauteile geeignet, deren Dicke etwa der axialen Länge des Gewindes der Schraube entspricht.

In der Montagetechnik werden in vermehrtem Ausmaß Montageeinheiten verlangt, bei denen mehrere Bestandteile in einer vormontierten Einheit bereits zusammengefügt sind. Die Montageeinheit aus einem Bauteil und meist mehreren Schrauben wird dann mit einem Werkstück verbunden. Ein typisches Beispiel für diese Technik ist ein Oberteil und ein Unterteil, die miteinander durch eine oder mehrere Schrauben verschraubt werden müssen. Dabei wird aus dem Oberteil als Bauteil und den meist mehreren Schrauben eine vormontierte Montageeinheit geschaffen, an der die Schrauben unverlierbar gehalten sind. Diese Montageeinheit wird dann mit dem Unterteil als Werkstück verschraubt, wobei die Schrauben entweder nacheinander oder gleichzeitig angezogen werden können, insbesondere unter Einsatz eines mehrspindligen automatischen Schraubers. Typische Einsatzfälle für solche Montageeinheiten liegen im Automobilbau an. Dabei bildet beispielsweise der gegossene Deckel eines gegossenen Gehäuses, z. B. aus Kunststoff, Aluminium oder Magnesium, oder ein Deckel eines Getriebes das Bauteil, welches mit den Schrauben mit dem Werkstück, also dem Gehäuse bzw. dem Getriebegehäuse, verschraubt wird. Durch die Schaffung solcher Montageeinheiten wird ein möglichst hoher Grad der Vorfertigung erreicht. Die Schrauben befinden sich bereits in ausgerichtetem Zustand an dem Bauteil verliersicher vormontiert. Sie sind während des Transportes vor Beschädigung weitgehend geschützt und erlauben die schnelle Verbindung mit dem Werkstück.

Eine Montageeinheit der eingangs beschriebenen Art ist aus der PCT-Anmeldung mit der internationalen Veröffentlichungsnummer WO 95/21335 bekannt. Die dortige Montageeinheit weist ein Bauteil, also beispielsweise einen Gehäusedeckel, sowie mindestens ein Fixierteil in Form einer Schraube auf. Zu jeder Schraube gehört jedoch noch ein drittes Teil, nämlich eine als Verliersicherung eingesetzte Hülse. Die Hülse besteht aus Metall, insbesondere aus Blech. Sie verteuert die Herstellkosten der Montageeinheit. Die Hülse wird in ein entsprechendes Durchgangsloch an dem Bauteil eingepresst, wozu ein gesonderter Vormontageschritt erforderlich ist. Die Hülse sitzt durch Reibschluss in dem Durchgangsloch des Bauteils. Sie besitzt eine Bauhöhe, die dem Vielfachen der Bauhöhe des Bauteils im Bereich des Durchgangsloches entsprechen kann. Auch die Schraube weist in der Regel eine entsprechend komplizierte Formgebung und eine große axiale Länge auf. Im Bereich des Schaftes der Schraube ist ein Ringflansch mit beiderseits sich anschließenden Ringrillen vorgesehen, der gesondert zu dem Gewinde am Schaft der Schraube hergestellt werden muss. Die Dimensionierung des Ringflansches ist auf die Dimensionierung eines Halskragens an der Hülse abgestimmt, so dass auf diese Art und Weise eine Axialsperre gebildet wird, die aber eine entsprechend große axiale Beweglichkeit in einem Bewegungsbereich eröffnet, so dass in der vormontierten Stellung die Schrauben zwar verliersicher, jedoch nicht fest an dem Bauteil gehalten sind. Es besteht auch die Möglichkeit, auf die Ausbildung eines Ringflansches an der Schraube zu verzichten. In diesem Falle müssen besondere Elemente an der Hülse ausgebildet werden, die in Verbindung mit der Schraube eine Axialsperre ergeben. Damit wird die Hülse wieder komplizierter und aufwendiger in ihrer Formgebung. In diesem Falle kann das Gewinde der Schraube einen Bestandteil der Axialsperre übernehmen. Zwischen dem Durchmesser des Durchgangsloches im Bauteil und dem Durchmesser des Schaftes der Schraube besteht eine Relation nur insofern, als die Schraube mitsamt der Hülse durch dieses Durchgangsloch hindurchtreten bzw. in dieses Durchgangsloch eingesetzt werden muss. Dennoch findet eine genaue axiale Ausrichtung der Schraube an dem Bauteil nicht statt, weil die Schraube nur begrenzt beweglich gehalten ist. Dies kann für den Einschraubvorgang der Schraube im Werkstück einen Vorteil bedeuten, wenn sichergestellt ist, dass die Schraube zentrierend den Eingang in das Gewinde im Werkstück findet. Durch die Möglichkeit der Achsverkippung der Schrauben gegeneinander ist jedoch das Eintreten der freien Schaftenden in die Gewinde im Werkstück nur bedingt zu erreichen. Diesen Nachteilen kann man dadurch entgegenwirken, dass die Hülse als drittes Bauteil innerhalb der Montageeinheit eine relativ große axiale Länge aufweist, insbesondere erheblich länger ausgebildet ist als die Wandstärke des Bauteils. Durch die Länge der Hülse muss auch die Länge der Schraube vergrößert werden, was nicht nur einen zusätzlichen Kostenaufwand bedeutet, sondern auch in manchen Fällen die Funktion nachteilig beeinflusst. Der grundsätzliche Einsatz solcher Hülsen, also bei Montageeinheiten aus mindestens drei einzelnen Elementen, ist insofern nachteilig, als die Hülse beim Verschrauben der Schraube in das Werkstück mitverspannt wird. Wenn dann noch Hülsen aus vergleichsweise dünnem deformierbaren Blech eingesetzt werden, so besteht die Gefahr unterschiedlicher Verformungen der Hülsen beim Anziehen der Schrauben, so dass die Aufbringung einer reproduzierbaren Vorspannkraft nur bedingt möglich ist.

Die DE 196 51 838 A1 zeigt ein aus Kunststoff bestehendes Bauteil, welches unter Zwischenschaltung einer Dichtung mit einem Werkstück zu verschrauben ist. Auch hier findet eine Hülse aus metallischem Werkstoff Verwendung, die das Bauteil durchsetzt und die mit der Dichtung verbunden ist. Auch hier muss die Schraube einen gesondert herzustellenden Ringflansch aufweisen, der mit der Hülse im Sinne einer Axialsperre zusammenwirkt. Auf diese Weise ist die Schraube lose, aber verliersicher an der Hülse gehalten. Die zusätzlich zu dem Bauteil und der Schraube eingesetzte Hülse als drittes Element der Montageeinheit muss sich jedoch nicht unbedingt durch das gesamte Durchgangsloch im Bauteil hindurch erstrecken. So zeigt die DE 195 46 072 C2 eine axial verkürzte Hülse mit einem tiefgezogenen konischen Kragen, der nur teilweise unter Reibschluss in ein entsprechend teilweise konisch gestaltetes Durchgangsloch im Bauteil eingreift. Die Unverlierbarkeit wird hier durch Reibkräfte erbracht, so dass eine entsprechend hohe Unsicherheit resultiert. Auch dabei gelangt letztendlich die scheibenartig ausgebildete Hülse zwischen die Auflagefläche am Kopf der Schraube und der entsprechenden Gegenfläche am Bauteil. Die Hülse wird also auch hier einklemmt, und es bestehen grundsätzlich ähnliche Nachteile, wie oben beschrieben.

Der Erfindung liegt die Aufgabe zugrunde, eine vormontierbare bzw. vormontierte Montageeinheit aufzuzeigen, die insbesondere auch für nicht selbstfurchende Schrauben, z. B. Schrauben mit metrischem Gewinde, geeignet ist und bei der die einzelne Hülse der vormontierten Montageeinheit nicht im Kraftfluss liegt, wenn die Schraube in das Werkstück eingeschraubt ist. Außerdem sollen die Schraube bzw. die Schrauben in der vormontierten Stellung unverlierbar an dem Bauteil gehalten sein.

Erfindungsgemäß wird dies bei einer Montageeinheit der eingangs beschriebenen Art dadurch erreicht, dass die Hülse als Formteil aus Kunststoff ausgebildet und in dem Durchgangsloch des Bauteils unter elastischer Verformung mit Reibschluss und/oder Formschluss festsetzbar ist und zur zentrierenden Aufnahme der Schraube einen Innendurchmesser aufweist, der nur geringfügig größer als der Außendurchmesser des mit dem Gewinde versehenen Schaftes der Schraube ausgebildet ist, und dass die Auflagefläche an der Schraube zur Übertragung der Axialkraft unter Umgehung der Hülse mit dem Bauteil direkt oder indirekt in Kontakt kommend ausgebildet ist.

Die Erfindung baut auf der Idee auf, statt einer Hülse aus metallischem Werkstoff eine Hülse aus Kunststoff einzusetzen. Die Hülse kann in einfacher Weise als Formteil hergestellt werden, das in dem Durchgangsloch des Bauteils unter elastischer Verformung mit Reibschluss und/oder Formschluss festsetzbar ist. Unter einem Reibschluss wird auch ein Kraftschluss verstanden, der z.B. durch Aufbringung eines mikroverkapselten Klebers auf die äußere Mantelfläche der Hülse oder die Zylinderfläche des Durchgangsloches im Bauteil bewirkt wird. Das Durchgangsloch kann sehr einfach als Bohrung ausgebildet sein. Der Innendurchmesser der Hülse ist nur geringfügig größer als der Außendurchmesser des Gewindes der Schraube. Die Schraube kommt mit der Hülse nur im Bereich eines nach innen vorspringenden Kragens in Verbindung, wird aber ansonsten durch die Länge der Hülse zentrierend geführt. Für das Zusammenbringen von Schraube und Hülse sind vorteilhaft nur geringe Fügekräfte erforderlich. Die Vormontage ist auch gut automatisierbar, da nur ein einfaches Eindrücken der Schraube relativ zur Hülse erforderlich ist, mit und ohne jede Dreh- oder Rastbewegung. Die Schraube kann in die im Bauteil eingesetzte Hülse eingedrückt werden. Es ist aber auch möglich, die Hülse zunächst auf die Schraube aufzuschieben und erst dann die Hülse in das Bauteil einzubringen. Durch Einsatz einer Hülse aus Kunststoff wird eine Kontaktkorrosion, wie sie zwischen einer Stahlhülse in einem Bauteil aus Magnesium auftritt, vermieden. An der Montageeinheit können eine oder mehrere Schrauben, auch solche mit einem metrischen Gewinde, eingesetzt werden. Es können aber auch gewindeformende Schrauben eingesetzt werden, vorzugsweise solche, die beim Eindrehen ein Gewinde spanlos formen. Es wird eine abgestimmte Relation zwischen dem Durchmesser des Durchgangsloches im Bauteil, der in das Durchgangsloch einzubringenden Hülse und der Dimensionierung der Schraube, insbesondere in ihrem mit Gewinde versehenen Schaftabschnitt, hergestellt, so dass nach der Vormontage die Schraube das Durchgangsloch durchsetzt bzw. in dieses eingreift. Damit wird nicht nur die Axialsperre zwischen Kragen und Gewinde geschaffen, sondern zugleich durch den auf den Außendurchmesser des Gewindes im Schaftabschnitt abgestimmten Innendurchmesser der Hülse auch eine für die Zentrierung hinreichende Achsausrichtung der Schraube relativ zum Bauteil erreicht. Die Ausrichtung der Achse der Schraube ist damit festgelegt, und die Schraube kann das Loch, insbesondere Gewindeloch, im Werkstück leicht finden. Wenn die Schraube nur teilweise die Hülse in dem Durchgangsloch durchsetzt, liegt das Gewinde der Schraube teilweise im Bereich der Hülse und teilweise auf der dem Kopf zugekehrten Seite der Schraube außerhalb des Durchgangsloches. Das Gewinde ist damit während des Transportes vom Hersteller der vormontierten Montageeinheit bis zum Verarbeiter in geschützter Stellung, so dass Beschädigungen nicht zu erwarten sind. Die Schraube oder die Schrauben erhalten in den jeweiligen Hülsen und diese in den Durchgangslöchern bei insoweit verbesserter Funktion eine achsausgerichtete Stellung, in der auch die Unverlierbarkeit erbracht ist.

In der Regel ist die Auflagefläche an der Schraube zur Übertragung der Axialkraft unter Umgehung der Hülse mit dem Bauteil in direkten Kontakt kommend ausgebildet, insbesondere ohne dass die Aufbringung und Einwirkung der Axialkraft in angezogenem Zustand der Schraube beeinträchtigt wird. Die Hülse besteht aus Kunststoff und wird beim Einschrauben der Schraube in das Werkstück durch das Gewinde der Schraube nicht mehr belastet. Die Hülse bleibt in angezogenem Zustand der Schraube frei von jeglicher Axialkraft, so dass nachteilige Setzerscheinungen unter Vorspannkraftabfall nicht zu erwarten sind. Zur Erzielung einer Dichtwirkung zwischen Werkstück, Bauteil und Kopf der Schraube kann es jedoch sinnvoll sein, die Dimensionierung der Hülse so vorzunehmen, dass eine zur Erzielung der Dichtwirkung notwendige, begrenzte Axialkraft über die Hülse übertragen wird. Diese Axialkräfte bleiben jedoch vergleichsweise gering, so dass auch in einem solchen Fall keine Setzerscheinungen zu erwarten sind.

Es ist aber auch möglich, die Auflagefläche an der Schraube zur Übertragung der Axialkraft mit und ohne Umgehung der Hülse mit dem Bauteil in indirekten Kontakt zu bringen. In diesem Fall wird die Montageeinheit durch ein viertes Bauteil pro Schraube ergänzt, nämlich eine Stützscheibe, die sich einerseits an dem Bauteil und andererseits an der Auflagefläche an dem Kopf der Schraube abstützt. Die Stützscheibe kann Z-förmigen Querschnitt aufweisen. Dies ist insbesondere dann sinnvoll, wenn zur Einhaltung einer definierten Flächenpressung große Auflageflächen zwischen Bauteil und Stützscheibe erforderlich sind. Die Verwendung einer Stützscheibe eröglicht die Realisierung relativ großer Durchmesser der Auflagefläche auf dem Bauteil, die bei integrierter Ausbildung, z.B bei einer Bundschraube, herstellungstechnisch nicht mehr beherrschbar oder wirtschaftlich nicht sinnvoll sind. Bei Verwendung der Stützscheibe tritt als weiterer Vorteil ein relativ kleines Kopfreibmoment beim Anziehen der Schraube auf. Andererseits kann die Stützscheibe aber auch einstückig mit der Schraube ausgebildet sein, also gleichsam in den Kopf der Schraube integriert sein.

Es kann sinnvoll sein, wenn die Schraube im Bereich des Schaftes im Anschluss an die Auflagefläche eine einen Hinterschnitt bildende Ringnut aufweist, deren Durchmesser kleiner als der Innendurchmesser der Hülse und deren wirksame axiale Länge größer als die Länge der Hülse im Durchgangsloch des Bauteils ist. Insbesondere dann, wenn das Bauteil mehrere solcher Schrauben in der vormontierten Stellung aufweisen muss, so dass es für eine Mehrfachverschraubung mit dem Werkstück ausgebildet ist, ist es von Bedeutung, dass die Schraube im Bereich des Schaftes zwischen der Auflagefläche am Kopf und dem Gewindeabschnitt eine einen Hinterschnitt bildende Ringnut aufweist, deren Durchmesser kleiner als der Innendurchmesser der Hülse und deren axiale Länge unter Berücksichtigung der entsprechenden Übergangsradien größer als die axiale Länge des Durchgangsloches im Bauteil ist. Durch die Anordnung der Schraube wird in der vormontierten Einheit einerseits die Axialsperre und die Achsausrichtung sowie die Unverlierbarkeit der montierten Montageeinheit erreicht. Andererseits kommt die Schraube bzw. die Schrauben im Bereich der den Hinterschnitt bildenden Ringnut von der Hülse im Bauteil radial und axial frei, so dass unter Berücksichtigung der Toleranzen eine Anpassung der Schraube oder der Schrauben an dem Werkstück möglich wird. Sobald die Schraube mit ihrem Gewinde aus dem radial nach innen vorspringenden Kragen freigekommen ist, also z. B. nach der Vormontage, kann sich das Bauteil während der Montage am Werkstück im begrenztem Maß axial und/oder radial gegenüber dem Werkstück bewegen bzw. anpassen. Durch weiteres Anziehen der Schraube wird die Vorspannkraft aufgebracht. Auch beim Einsatz mehrerer Schrauben kommt das Bauteil in eine zwangsfreie Relativlage zu dem Werkstück. Von dieser Anpassung kann auch dann Gebrauch gemacht werden, wenn die Schrauben nacheinander in das Werkstück eingeschraubt werden. Gleiches gilt auch für das gleichzeitige Verschrauben mehrerer oder aller Schrauben in das Werkstück. In letzterem Falle ist es besonders vorteilhaft, wenn gewindefurchende Schrauben Verwendung finden und die Bohrungen im Werkstück, in die die Schrauben eingreifen, nicht mit Gewinde versehen werden, sondern lediglich als vorgegossene oder spanend bearbeitete Bohrungen ausgebildet sind. Man spart dabei einerseits den Herstellungsschritt von Gewinden im Werkstück ein und nutzt die gewindeformende Eigenschaft der Schraube aus. Bei Einhaltung entsprechender Toleranzen ist es aber auch möglich, die vormontierte Montageeinheit aus Bauteil und Schrauben mit einem Werkstück zu verbinden, in dessen den Schrauben zugeordneten Bohrungen auch bereits Gewinde enthalten sind. Dies gilt sowohl für das gleichzeitige Verschrauben mehrerer Schrauben in ein Werkstück als auch das Verschrauben mehrerer Schrauben nacheinander. Auch hierbei wirkt sich die Verwendung von Hülsen aus nachgiebigem Kunststoff, vorteilhaft aus.

Die Hülse kann an der dem Kopf der Schraube zugekehrten Endbereich einen nach außen vorspringenden Kragen aufweisen, der beim Einführen der Hülse in das Durchgangsloch einen Anschlag bildet. Die Hülse wird damit vor einem zu tiefen Eindringen in das Bauteil und weiter in das Werkstück geschützt. In Verbindung damit weist die Schraube zur Verhinderung des Einklemmens von Material der Hülse beim Anziehen im Anschluss an die Auflagefläche eine umlaufende als Ausweichnut ausgebildete Vertiefung auf, die den nach außen vorspringenden Kragen aufnimmt. In der Regel ist die Höhe der Vertiefung größer als die Höhe des überstehenden Kragens der Hülse. In diesem Fall bleibt die Hülse vollkommen frei von einer Axialkraft der Schraube. Wenn die Höhe der Vertiefung kleiner als die Höhe des überstehenden Kragens der Hülse bemessen ist, wird ein Teil der Axialkraft durch Einklemmen des Kragens der Hülse verbraucht. Der wesentliche und überwiegende Teil der Hülse bleibt jedoch auch hier frei von einer Axialkraft.

Die Hülse kann in dem Durchgangsloch des Bauteils durch Reibschluss und/oder Formschluss festsetzbar ausgebildet sein. Die Hülse ist damit in dem Durchgangsloch des Bauteils sicher, insbesondere verdrehgesichert, gehalten. Eine Festsetzung durch Reibschluss und/oder Formschluss kann durch das Aufbringen von Kleber auf der Außenfläche der Hülse erfolgen. Vorteilhafterweise wird hierzu mikroverkapselter Kleber verwendet, dessen Klebewirkung beim Einpressen der Hülse in jedes Durchgangsloch des Bauteils freigesetzt wird. Das Durchgangsloch im Bauteil und/oder der Außendurchmesser der Hülse können auch unrund gestaltet sein, beispielsweise als Vieleck, mit einer radial abstehenden Nase, mit ovalem Querschnitt, als Vierkant o. dgl.. Die Festsetzung durch Reibschluß erfolgt durch entsprechende Dimensionierung und Einpressen der Hülse in das Durchgangsloch. Dies kann in verschiedener Weise erfolgen. Die Hülse kann mit beidseitigem Überstand, mit einseitigem Überstand oder ohne jeglichen Überstand im Durchgangsloch festgesetzt werden.

Die Hülse kann eine größere Bauhöhe als das Bauteil im Bereich des Durchgangsloches aufweisen und auf der dem Kopf der Schraube zugekehrten Seite einen radial über das Durchgangsloch überstehenden Kragen oder entsprechende Vorsprünge aufweisen, die das Einpressen der Hülse in das Durchgangsloch des Bauteils begrenzen. Der Kragen und die Vorsprünge bilden zugleich einen Anschlag beim Einbringen der Schraube und verhindern, dass die Hülse aus dem Durchgangsloch ausgetrieben wird. Auch ohne Kragen und Vorsprünge kann die Hülse zumindest auf der dem Kopf der Schraube zugekehrten Seite außerhalb der Höhe des Bauteils im Bereich des Durchgangslochs durch das Einbringen der Schraube spreizbar ausgebildet sein, so dass der sich nach außen erstrekkende Überstand der Hülse beim Einbringen der Schraube einen radial vorstehenden Anschlag bildet. Die Hülse kann mehrere sich elastisch verformenden Fortsätze aufweisen, die schräg nach innen weisend angeordnet sind. Die nach innen vorstehenden Fortsätze der Hülse können zwecks erleichterten Einführens der Schraube mit einer Fase versehen sein.

Das Gewinde am Schaft der Schraube kann eine kleinere axiale Erstreckung als die Dicke des Bauteils aufweisen. Damit besteht die Möglichkeit, dass die Schraube während des Transport der vormontierten Einheit geschützt in die Hülse zurücktritt und so Beschädigungen vermieden werden.

Die Schraube kann am freien Ende ihres Schaftes einen gewindefreien Zentrieransatz aufweisen, der einen kleineren Außendurchmesser als der Innendurchmesser der Hülse besitzt. Dieser Zentrieransatz ist sinnvoll beim Einbringen der Schraube in die Hülse einerseits und Einschrauben der Schraube in das Gewindeloch oder Gewinde im Werkstück.

Die Vertiefung im Anschluss an die Anlagefläche kann eine geringere axiale Erstreckung als der Kragen der Hülse aufweisen, so dass in verspanntem Zustand eine Dichtwirkung an dieser Stelle erreicht wird. Für die axiale Zusammendrückung des Kragens der Hülse zur Erreichung der Dichtwirkung wird nur ein kleiner Anteil der Axialkraft der Schraube benötigt. Der größte Teil der Hülse bleibt auch hier kraftfrei.

Die Erfindung wird anhand bevorzugter Ausführungsbeispiele weiter erläutert und beschrieben. Es zeigen:
- Fig. 1: eine Schnittdarstellung einer ersten Ausführungsform der Montageeinheit beim Ansetzen an einem Werkstück,
- Fig. 2: eine Schnittdarstellung eines Teils der Montageeinheit gemäß Fig. 1 nach der Montage an dem Werkstück,
- Fig. 3: eine Schnittdarstellung einer zweiten Ausführungsform der Montageeinheit beim Ansetzen an einem Werkstück,
- Fig. 4: eine Schnittdarstellung einer dritten Ausführungsform der Montageeinheit mit einer selbstfurchenden Schraube,
- Fig. 5: eine Schnittdarstellung einer vierten Ausführungsform der Montageeinheit beim Ansetzen an einem Werkstück,
- Fig. 6: eine Schnittdarstellung einer weiteren Ausführungsform der Montageeinheit nach der Montage an einem Werkstück,
- Fig. 7: einen Vertikalschnitt durch eine Ausführungsform der Hülse,
- Fig. 8: eine Draufsicht auf die Hülse gemäß Fig. 7,
- Fig. 9: einen Vertikalschnitt durch eine weitere Ausführungsform der Hülse,
- Fig. 10: eine Draufsicht auf die Hülse gemäß Fig. 9,
- Fig. 11: einen Vertikalschnitt durch eine weitere Ausführungsform der Hülse,
- Fig. 12: eine Draufsicht auf die Hülse gemäß Fig. 11,
- Fig. 13: einen Vertikalschnitt durch eine weitere Ausführungsform der Hülse, und
- Fig. 14: eine Draufsicht auf die Hülse gemäß Fig. 13.

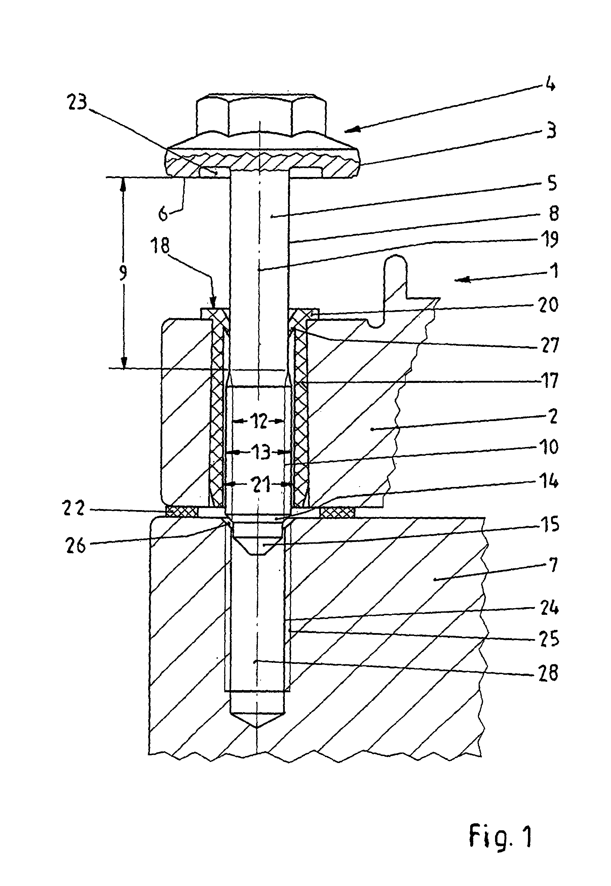

In Fig. 1 ist eine Montageeinheit 1 mit einem der Erläuterung dienenden Teilbereich dargestellt. Die Montageeinheit 1 besteht aus einem Bauteil 2 und mindestens einer Schraube 3. In den Zeichnungen ist generell jeweils nur eine Schraube 3 in Verbindung mit einem Bauteil 2 dargestellt. Es versteht sich, dass an einem Bauteil 2 insbesondere auch mehrere Schrauben 3 in entsprechendem Abstand voneinander vorgesehen sein können.

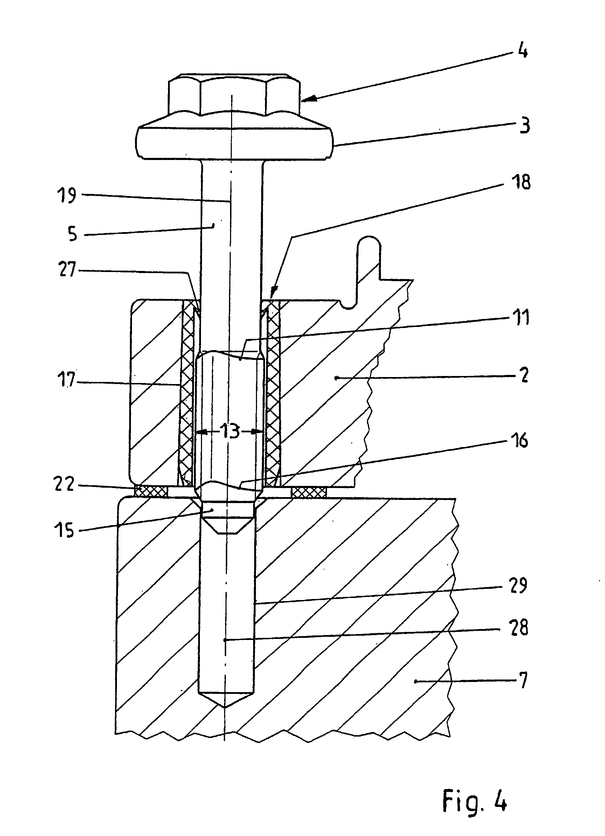

Die Schraube 3 weist einen Kopf 4, der in bekannter Weise zum Ansatz eines Verdrehwerkzeuges ausgebildet ist, und einen Schaft 5 auf. Der Kopf 4 besitzt am Übergang zum Schaft 5 eine Auflagefläche 6, die bei der Montage der Montageeinheit 1 an einem Werkstück 7 an dem Bauteil 2 zur Anlage kommt. Der Schaft 5 jeder Schraube 3 weist ausgehend vom Kopf 4 bzw. der Auflagefläche 6 eine Ringnut 8 auf, die sich über eine axiale Länge 9 des Schaftes 5 erstreckt. Der Durchmesser der Ringnut 8 entspricht hier dem Rolldurchmesser des Schaftes 5 der Schraube 3, einschließlich des Abschnitts, aus dem letztendlich ein Gewinde 10 entsteht. An die Ringnut 8 schließt das Gewinde 10 an, welches hier als metrisches Gewinde ausgebildet ist und sich mehr oder weniger über die gesamte Länge des Schaftes 5 im Anschluss an die Ringnut 8 erstreckt. Der Schaft 5 kann aber auch (Fig. 4) im Bereich des Gewindes 10 des Schaftes 5 einen trilobularen Querschnitt 11, der durch eine geschwungene Linienführung angedeutet ist, aufweisen. Das Gewinde 10 am Schaft 5 weist einen Kerndurchmesser 12 und einen Außendurchmesser 13 auf. Der Flankendurchmesser des Gewindes 10 wird nach der bekannten Formel bestimmt. Am freien Ende des Schaftes 5 kann ein konisch ausgebildeter Ansatzbereich 14 vorgesehen sein. Es kann zusätzlich, wie dargestellt, ein Zentrieransatz 15 vorgesehen sein. Über die Länge des Schaftes 5 der gewindefurchenden Schraube 3 (Fig. 4) schließt sich in Richtung auf den Kopf 4 an den Ansatzbereich 14 ein Furchbereich 16 und ein Glättbereich an.

In dem Bauteil 2 ist an der dafür vorgesehenen Stelle ein Durchgangsloch 17 vorgesehen, welches in der Regel aus einer durchgehenden Bohrung in dem Bauteil 2 besteht. Es versteht sich, dass das Bauteil 2 an den dafür vorgesehenen Stellen für jede Schraube 3 ein solches Durchgangsloch 17 aufweist.

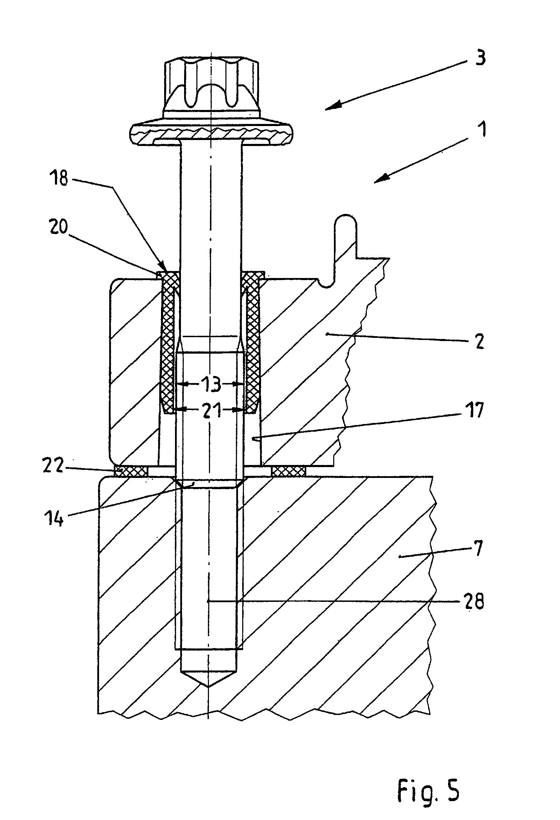

Das Durchgangsloch 17 in dem Bauteil 2 kann auch insbesondere unrund gestaltet sein, also z. B. trilobular oder vieleckig. Es kann eine radiale Ausnehmung besitzen oder auch als Langloch gestaltet sein. All diese unrunden Querschnitte des Durchgangslochs 17 dienen dem Zweck, eine Hülse 18 sicher, insbesondere verdrehgesichert, aufnehmen zu können. Es genügt aber auch, die Hülse 18 mit zylindrischer Gestalt und das Durchgangsloch 17 ebenfalls zylindrisch aufzubilden und die Hülse 18 in das Durchgangsloch 17 einzupressen, so dass sie durch Reibschluss sicher gehalten ist. Die Hülse 18 bildet ein dübelartiges Vormontageelement und dient der Aufnahme der Schraube 3 an dem Bauteil 2, und zwar in der Weise, dass die Achse 19 der Schraube 3 in der vormontierten Stellung zumindest angenähert rechtwinklig zu dem Bauteil 2 bzw. dem Werkstück 7 ausgerichtet wird. Die Hülse 18 kann eine größere axiale Erstreckung aufweisen, als es der Dicke des Bauteils 2 entspricht. Es kann insbesondere ein Kragen 20 vorgesehen sein, der sich außen auf der Oberfläche des Bauteils 2 anlegt und einen Anschlag bildet, der ein tieferes Einpressen oder Durchpressen durch das Bauteil 2 verhindert. Auf der anderen Seite, also dem Werkstück 7 zugekehrt, kann die Hülse 18 mit dem Ende des Durchgangloches 17 abschließen oder auch, wie in Fig. 5 gezeigt, vergleichsweise kürzer ausgebildet sein. Die Hülse 18 kann aber auch um ein gewisses Maß über dem Bauteil 2 vorstehen (nicht dargestellt) und dort mit einem Fortsatz versehen sein, der insbesondere eine Spreizrippe bildet. Damit ist die Hülse 18 in axialer Richtung nach beiden Richtungen festgelegt gehalten. Der axiale Überstand der Spreizrippe sollte nur dann vorgesehen sein, wenn sich dies konstruktiv ohne Beeinträchtigung der Vorspannkraft anwenden lässt, beispielsweise dann, wenn eine Dichtung 22 zwischen Bauteil 2 und Werkstück 7 Anwendung findet, deren Bauhöhe größer ist als der axiale Überstand der Spreizrippe an der Hülse 18. Die Hülse 18 besteht aus Kunststoff, der im Vergleich zu einer Blechhülse wesentlich elastischer gestaltet ist, wie es beispielsweise zum Ausgleich eines Mittenversatzes beim Einschrauben mehrerer Schrauben 3 an einem Werkstück 7 erforderlich ist.

Die Hülse 18 weist einen Innenduchmesser 21 auf, der nur geringfügig größer als der Außendurchmesser 13 des Gewindes 10 bemessen ist. Die axiale Länge der Hülse 18 entspricht im wesentlichen der Dicke des Bauteils 2, so dass damit die Schraube 3 mit ihrer Achse 19 zumindest etwa rechtwinklig zu der Oberfläche des Werkstücks 7 ausgerichtet gehalten ist, wie es zu Beginn des Einschraubvorgangs in das Werkstück 7 erforderlich ist.

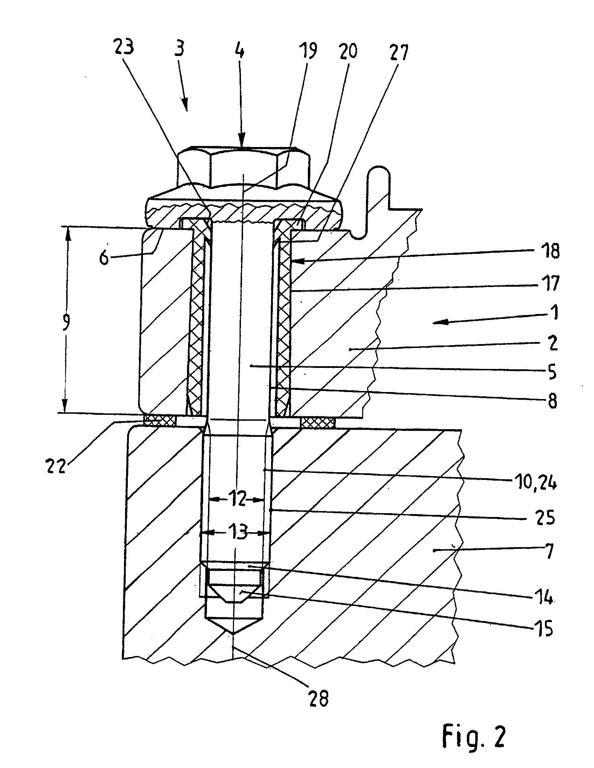

Die Schraube 3 weist im Bereich um den Schaft 5 herum, der von der Anlagefläche 6 umschlossen wird, eine umlaufende Vertiefung 23 auf, die zur Aufnahme des Kragens 20 der Hülse 18 ausgebildet und bestimmt ist. Die Dimensionierung ist so getroffen, dass der Kragen 20 mit hinreichend Spiel in axialer und radialer Richtung in der Vertiefung 23 aufgenommen wird, wenn die Schraube festgezogen ist. In diesem Zustand (Fig. 2) nimmt die Vertiefung 23 das Material des Kragens 20 der Hülse 18 mit Spiel auf, so dass die Übertragung der Axialkraft über die Anlagefläche 6 auf das Bauteil 2 nicht beeinträchtigt wird. Insbesondere wird zwischen der Auflagefläche 6 und der Oberfläche des Bauteils 2 kein Kunststoffmaterial eingeklemmt, welches zu Setzerscheinungen führen könnte.

In dem Werkstück 7 ist eine auf die Schraube 3 abgestimmte Bohrung 24 mit Gewinde 25 vorgesehen, welches auf das Gewinde 10 der Schraube 3 abgestimmt ist. Die Bohrung 24 ist oben mit einer Fase 26 versehen (Fig. 1 und 5), die dem erleichterten Einführen des Zentrieransatzes 15 in die Bohrung 24 bzw. des Ansatzbereiches 14 dient.

Die Hülse 18 weist im Bereich des Kragens 20, jedenfalls an ihrem oberen Endbereich, nach innen abstehende Fortsätze 27 auf, die schräg zur Achse 19 nach unten weisend angeordnet sein können. Es können zwei bis etwa sieben Fortsätze 27 auf dem inneren Umfang der Hülse 18 verteilt angeordnet sein. Wenn für die Hülse 18 ein weicher Kunststoff eingesetzt wird, können die Fortsätze auch zu einer umlaufenden Rippe zusammengefasst sein.

Die Vormontage der Montageeinheit aus einem Bauteil 2 und mindestens einer Schraube 3 mittels der Hülse 18 lässt sich auf verschiedene Arten erstellen. In einer ersten Montageweise wird die Hülse 18 gesichert in dem Durchgangsloch 17 des Bauteils 2 festgesetzt. Anschließend wird die Schraube 3 in die Hülse 18 eingeführt und etwa so weit axial eingepresst oder auch eingeschraubt, wie dies Fig. 1 erkennen lässt. Dabei spreitzen sich die Fortsätze 27 der Hülse 18 radial auf, insbesondere wenn das Gewinde 10 an den Fortsätzen 27 vorbeigleitet. Anschließend im Bereich der Ringnut 8 spreitzen sich die Fortsätze 27 radial etwas nach außen und halten die Schraube 3 in jeder Stellung fest, sobald der Einpressvorgang beendet wird (Fig. 1). Die Hülse 18 hält die Schraube 3 mit ihrer Achse 19 ausgerichtet fest, da der Innendurchmesser 21 der Hülse nur geringfügig größer als der Außenduchmesser 13 des Gewindes 10 bemessen ist. Es versteht sich, dass das Bauteil 2 in der Regel mit mehreren solcher Schrauben 3 versehen ist. Die Montageeinheit wird so zum Einbauort transportiert und dann dort auf das Werkstück 7 so aufgesetzt, wie dies Fig. 1 in einem Zwischenschritt zeigt. Anschließend erfolgt das Verschrauben der Schrauben 3, wobei dies gleichzeitig oder auch nacheinander geschehen kann. Dabei fädeln die Zentrieransätze 15 in die Bohrungen 24 ein. Infolge der Elastizität des Kunststoffmaterials der Hülsen 18 können die Schrauben 3 begrenzt gegeneinander ausweichen und einen Versatz der Achsen 28 mehrerer Bohrungen 24 im Werkstück 7 gegeneinander ausgleichen. Die Gewinde 10 greifen dann in die Gewinde 25 ein, und am Ende des Einschraubvorgangs ergibt sich an jeder Schraube 3 eine Relativlage, wie dies aus Fig. 2 erkennbar ist. Jede Schraube ist mit ihrem Gewinde 10 aus der Hülse 18 ausgetreten und freigekommen. Die Hülse 18 hat in dieser Position keine Funktion. Die Vorspannkraft wird ausschließlich über die Anlagefläche 6 übertragen.

Es ist bei der Montage jedoch auch möglich, zunächst die Hülsen 18 mit den Schrauben 3 in Kontakt zu bringen, also auf das Gewinde 10 und dann weiter in den Bereich der Ringnut 8 am Schaft 5 zu schieben. Solche Einheiten aus Schraube 3 und Hülse 18 können dann je in ein Durchgangsloch 17 an dem Bauteil 2 eingepresst werden. Auch hier wird die elastisch-plastische Nachgiebigkeit des Kunststoffes der Hülse 18 für einen solchen Montageschritt genutzt. Das Festziehen und Verspannen erfolgt dann in gleicher Weise, wie dies oben bereits beschrieben wurde. Es ergibt sich dann eine Endstellung, die wiederum aus Fig. 2 erkennbar ist.

Damit die Schraube 3 in der Hülse 18 positionsgenau und ausgerichtet im Bauteil 2 fest aufgenommen ist, besitzt die Hülse 18 den Innendurchmesser 21, der nur geringfügig kleiner als der Außendurchmesser 13 des mit Gewinde 10 versehenen Schaftes 5 der Schraube 3 ausgebildet ist.

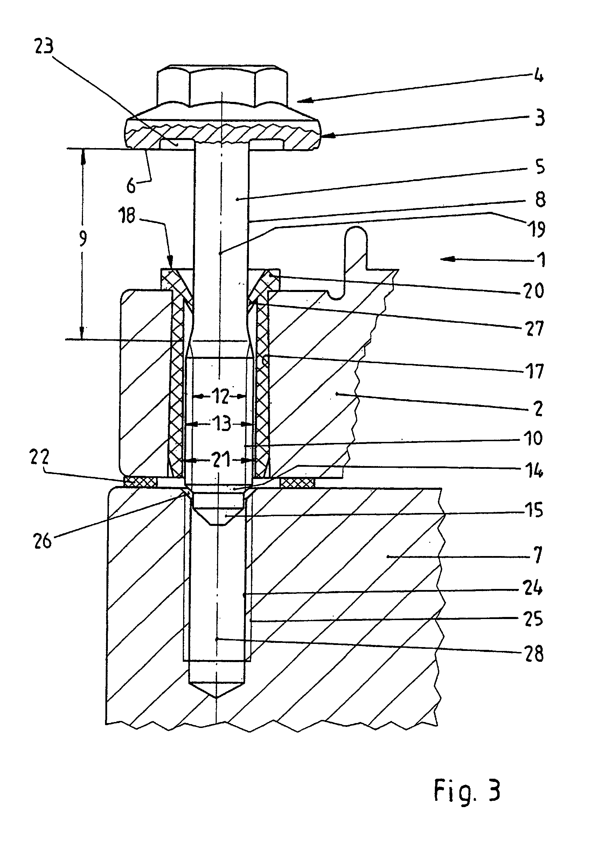

Die in Fig. 3 dargestellte Ausführungsform entspricht in wesentlichen Teilen der Ausführungsform der Fig. 1 und 2, so dass auf die dortige Beschreibung verwiesen werden kann. Anders als dort weist der Kragen 20 jedoch eine größere Höhe als die Höhe der Vertiefung 23 auf. Beim Anziehen der Schraube 3 während des Einschraubens in das Werkstück 7 wird der Kragen 20 der Hülse 18 axial zusammengedrückt, so dass an dieser Stelle eine Dichtwirkung entsteht. Hierzu wird nur ein geringer Teil der Axialkraft verbraucht. Große Bereiche der Länge der Hülse 18 bleiben ohne Einwirkung der Axialkraft. Außerdem besitzt die Ringnut 8 einen kleineren Durchmesser, als es dem Rolldurchmesser des Schaftes 5 im Bereich des Gewindes 10 entspricht. Der Durchmesser der Ringnut 8 kann sogar kleiner als der Kerndurchmesser des Gewindes 10 sein, wodurch eine Überschraubbarkeit erreicht wird, so dass auch ein vergleichsweise tieferes Einschrauben möglich ist.

In Fig. 4 ist eine weitere Ausführungsform der Montageeinheit dargestellt und verdeutlicht. Sie stimmt in weiten Bereichen mit der Ausführungsform der Fig. 1 bis 3 überein, weshalb auf die dortige Beschreibung verwiesen werden kann. Lediglich das Gewinde 10 der Schraube 3 ist hier nicht als metrisches Gewinde, sondern als gewindefurchendes Gewinde 10 mit einem trilobularen Querschnitt 11 ausgebildet. Dementsprechend befindet sich im Werkstück 7 lediglich eine niedergebrachte Bohrung 29, in die die Schraube 3 selbstfurchend ihr Gewinde beim Einschrauben einschneidet. Die Hülse 18 weist hier keinen Kragen 20 jedoch die Fortsätze 27 auf. Die axiale Erstreckung der Hülse entspricht der Dicke des Bauteils 2. Es fehlt am unteren Ende der Hülse 18 eine Spreizrippe, so dass eine solche Hülse 18 sich in besonderer Weise eignet, aufgesetzt zusammen mit einer Schraube 3 in das Durchgangsloch 17 des Bauteils 2 axial eingepresst zu werden.

Die in Fig. 5 dargestellte Ausführungsform baut auf der Ausführungsform der Fig. 1 und 2 auf. Abweichend von dort ist die Hülse 18 axial verkürzt und endet innerhalb des Durchgangsloches 17. Das untere Ende der Hülse 18 befindet sich jedoch relativ zu einer Stelle an dem Schaft 5 der Schraube 3, der das Gewinde 10 trägt. Da der Innendurchmesser 21 der Hülse nur geringfügig größer als der Außendurchmesser 13 des Gewindes 10 bemessen ist, findet auch hier eine Ausrichtwirkung auf die Achse 19 der Schraube 3 statt, die zum Einfädeln bzw. Zentrieren ausreicht, obwohl hier ein Zentrieransatz 15 an der Schraube 3 fehlt. Die Höhe des Kragens 20 entspricht in etwa der Höhe bzw. Tiefe der Vertiefung 23.

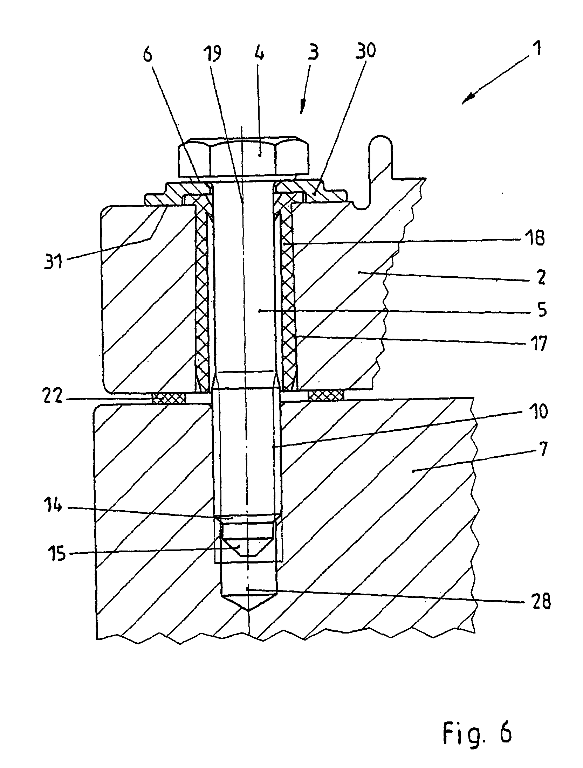

Die in Fig. 6 dargestellte Ausführungsform baut auf der Ausführungsform der Fig. 1 und 2 auf. Abweichend von dort ist die Montageeinheit durch ein viertes Element, nämlich eine Stützscheibe 30, ergänzt. Die eingesetzte Schraube 3 ist wie allgemein üblich, also ohne Vertiefung 23, mit durchgehender Auflagefläche 6 ausgestattet. Die Stützscheibe 30 besitzt Z-förmigen Querschnitt und damit eine vergleichsweise vergrößerte Anlagefläche 31 an dem Bauteil 2. Trotzdem entsteht beim Anziehen der Schraube 3 ein vorteilhaft kleies Kopfreibungsmoment. Die Stützscheibe 30 kann verliergesichert auf dem Schaft 5 der Schraube angeordnet sein, beispielsweise durch das aufgerollte Gewinde 10 gehalten, welches nach dem Aufstecken der Stützscheibe 30 auf den Schaft 5 der Schraube 3 aufgebracht wird. Man erkennt, dass die Stützscheibe 30 andererseits auch einstückig mit der Schraube 3, wie in Fig. 1 gezeigt, ausgebildet werden kann.

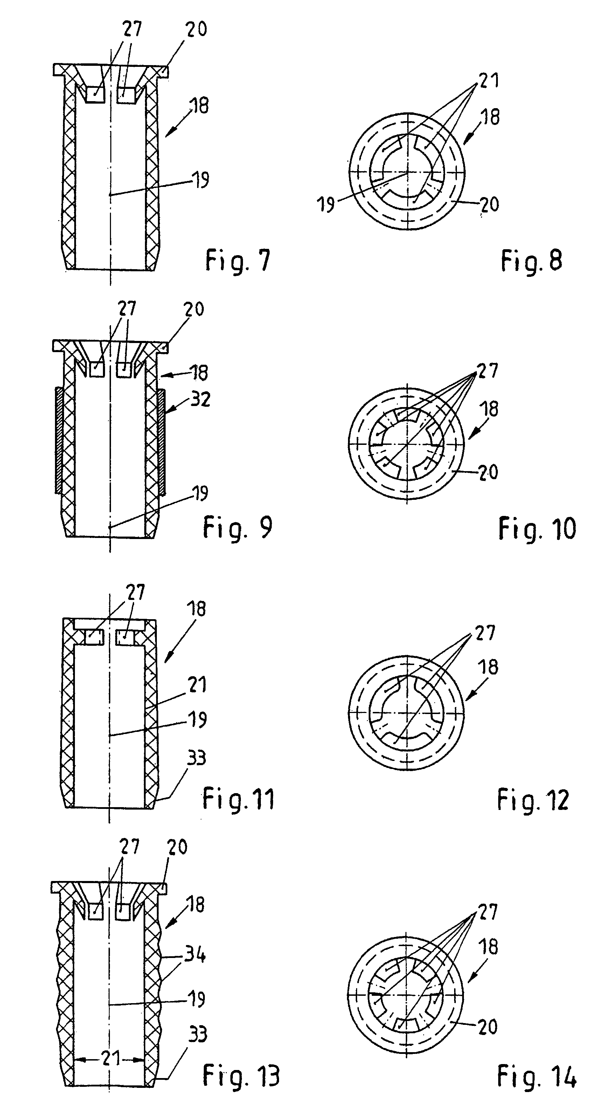

In den Fig. 7 bis 14 sind schließlich verschiedene Ausführungsformen der Hülse 18 verdeutlicht.

Die Hülse 18 gemäß den Fig. 7 und 8 weist drei über den Umfang gleichmäßig verteilt angeordnete Fortsätze 27 auf, die separat vom Innendurchmesser 21 der Hülse 18 nach innen abstehend angeordnet sind. Auch die Schräglage der Fortsätze 27 ist gut erkennbar. Radial nach außen erstreckt sich der Kragen 20. Kragen 20 und die Fortsätze 27 sind benachbart im oberen Bereich der Hülse 18 vorgesehen.

Die Hülse 18 gemäß den Fig. 9 und 10 weist fünf über den Umfang gleichmäßig verteilt angeordnete Fortsätze 27 auf, die separat vom Innendurchmesser 21 der Hülse 18 nach innen abstehend angeordnet sind. Die Hülse 18 ist auf einem Teil ihrer axialen Länge mit einer Kleberbeschichtung 32 versehen.

Die Hülse 18 gemäß den Fig. 11 und 12 weist wiederum drei über den Umfang gleichmäßig verteilt angeordnete Fortsätze 27 auf, die separat vom Innendurchmesser 21 der Hülse 18 radial nach innen abstehend angeordnet sind. Hier fehlt ein Kragen 20. Die Fortsätze 27 sind etwas unterhalb des oberen Endes der Hülse 18 angeordnet. Eine Einführfase 33 erleichtert das Einpressen der Hülse 18 in das Durchgangsloch 17 im Bauteil 2.

Die Hülse 18 gemäß den Fig. 13 und 14 weist wiederum fünf über den Umfang gleichmäßig verteilt angeordnete Fortsätze 27 auf, die separat vom Innendurchmesser 21 der Hülse 18 nach innen abstehend angeordnet sind. Die Hülse 18 ist auf ihrem äußeren Umfang mit Wulsten 34 versehen, die einen sicheren Sitz der in das Durchgangsloch 17 eingepressten Hülse 18 bewirken.

Die Hülse 18 kann an ihrem Außendurchmesser Übermaß gegenüber dem Durchgangsloch 17 aufweisen, um den festen Sitz nach dem Einpressvorgang zu begünstigen und die verdrehgesicherte Lagerung durch Reibschluss zu erzielen. Es ist auch möglich, die Hülse 18 unter Verwendung eines Klebemittels o. dgl. in dem Durchgangsloch 17 zu verankern. Im allgemeinen sind solche besonderen Maßnahmen jedoch nicht erforderlich.

### BEZUGSZEICHENLISTE

- 1 -: Montageeinheit
- 2 -: Bauteil
- 3 -: Schraube
- 4 -: Kopf
- 5 -: Schaft
- 6 -: Anlagefläche
- 7 -: Werkstück
- 8 -: Ringnut
- 9 -: axiale Länge
- 10 -: Gewinde

- 11 -: trilobularer Querschnitt
- 12 -: Kerndurchmesser
- 13 -: Außendurchmesser
- 14 -: Ansatzbereich
- 15 -: Zentrieransatz
- 16 -: Furchbereich
- 17 -: Durchgangsloch
- 18 -: Hülse
- 19 -: Achse
- 20 -: Kragen

- 21 -: Innendurchmesser
- 22 -: Dichtung
- 23 -: Vertiefung
- 24 -: Bohrung
- 25 -: Gewinde
- 26 -: Fase
- 27 -: Fortsatz
- 28 -: Achse
- 29 -: Bohrung
- 30 -: Stützscheibe

- 31 -: Anlagefläche
- 32 -: Kleberbeschichtung
- 33 -: Einführfase
- 34 -: Wulst

## Patentansprüche

1. Montageeinheit (1) aus einem Bauteil (2) und mindestens einer Schraube (3) sowie einer jeder Schraube zugeordneten Hülse (18), wobei das Bauteil (2) für jede Schraube (3) je ein Durchgangsloch (17) aufweist, jede Schraube (3) einen der Betätigung dienenden Kopf (4) mit einer dem Bauteil (2) zugekehrten Auflagefläche (6) und einen zumindest teilweise mit einem Gewinde (10) versehenen Schaft (5) besitzt und die Hülse (18) in das Durchgangsloch (17) einführbar ausgebildet und mit der Schraube (3) und dem Bauteil (2) verliersicher verbunden ist, **dadurch gekennzeichnet, dass** die Hülse (18) als Formteil aus Kunststoff ausgebildet und in dem Durchgangsloch (17) des Bauteils (2) unter elastischer Verformung mit Reibschluss und/oder Formschluss festsetzbar ist und zur zentrierenden Aufnahme der Schraube (3) einen Innendurchmesser (21) aufweist, der nur geringfügig größer als der Außendurchmesser (13) des mit dem Gewinde (10) versehenen Schaftes (5) der Schraube (3) ausgebildet ist, und dass die Auflagefläche (6) an der Schraube (3) zur Übertragung der Axialkraft unter Umgehung der Hülse (18) mit dem Bauteil (2) direkt oder indirekt in Kontakt kommend ausgebildet ist.

2. Montageeinheit nach Anspruch 1, **dadurch gekennzeichnet, dass** die Schraube (3) im Bereich des Schaftes (5) im Anschluss an die Auflagefläche (6) eine einen Hinterschnitt bildende Ringnut (8) aufweist, deren Durchmesser kleiner als der Innendurchmesser (28) der Hülse (18) und deren wirksame axiale Länge (9) größer als die Länge der Hülse (18) im Durchgangsloch (17) des Bauteils (2) ist.

3. Montageeinheit nach Anspruch 1 oder 2, **dadurch gekennzeichnet, dass** die Hülse (18) an der dem Kopf (4) der Schraube (3) zugekehrten Endbereich einen nach außen vorspringenden Kragen (20) aufweist, der beim Einführen der Hülse (18) in das Durchgangsloch (17) einen Anschlag bildet.

4. Montageeinheit nach Anspruch 3 oder 4, **dadurch gekennzeichnet, dass** die Schraube (3) zur Verhinderung des Einklemmens von Material der Hülse (18) beim Anziehen im Anschluss an die Auflagefläche (6) eine umlaufende als Ausweichnut ausgebildete Vertiefung (23) aufweist, die den nach außen vorspringenden Kragen (20) aufnimmt.

5. Montageeinheit nach Anspruch 3, **dadurch gekennzeichnet, dass** die Hülse (18) eine größere Bauhöhe als das Bauteil (2) im Bereich des Durchgangsloches (17) aufweist und auf der dem Kopf (4) der Schraube (3) zugekehrten Seite den radial über das Durchgangsloch (17) überstehenden Kragen (20) oder entsprechende Vorsprünge aufweist.

6. Montageeinheit nach Anspruch 1, **dadurch gekennzeichnet, dass** die Hülse (18) mehrere sich elastisch verformenden Fortsätze (27) aufweist, die schräg nach innen weisend angeordnet sind.

7. Montageeinheit nach Anspruch 6, **dadurch gekennzeichnet, dass** die nach innen vorstehenden Fortsätze (27) der Hülse (18) zwecks erleichterten Einführens der Schraube (3) mit einer Fase versehen sind.

8. Montageeinheit nach einem der Ansprüche 1 bis 7, **dadurch gekennzeichnet, dass** das Gewinde (10) am Schaft (5) der Schraube (3) eine kleinere axiale Erstreckung als die Dicke des Bauteils (2) aufweist.

9. Montageeinheit nach Anspruch 1, **dadurch gekennzeichnet, dass** die Schraube (3) am freien Ende ihres Schaftes (5) einen gewindefreien Zentrieransatz (15) aufweist, der einen kleineren Außendurchmesser als der Innendurchmesser (21) der Hülse (18) aufweist.

10. Montageeinheit nach Anspruch 4, **dadurch gekennzeichnet, dass** die Vertiefung (23) im Anschluss an die Anlagefläche (6) eine geringere axiale Erstreckung als der Kragen (20) der Hülse (18) aufweist, so dass in verspanntem Zustand eine Dichtwirkung an dieser Stelle erreicht wird.

## Claims

1. Assembly unit (1), comprising a component (2), at least one screw (3) and a bush (18) being associated with the at least one screw, the component (2) for each screw (3) including a through hole (17), each screw (3) including a head (4) being designed and arranged to rotate the screw, a supporting surface (6) facing the component (2), and a shank (5) at least partially including a thread (10), and the bush (18) being designed and arranged to be insertable into the through hole (17) and to be captively connected with the screw (3) and the component (2), **characterised in that** the bush (18) is made of plastic material, is designed and arranged to be fixedly connected in the through hole (17) of the component (2) resulting in elastic deformation due to frictional engagement and/or due to form fit, and for centering purposes of the screw (3) including an inner diameter (21) being slightly more than the outer diameter (13) of the thread (10) of the shank (5) of the screw (3), and the supporting surface (6) of the screw (3) is designed and arranged to operatively contact directly or indirectly the component (2) without contacting the bush (18) to transmit an axial-force.

2. The assembly unit of claim 1, **characterised In that** the screw (3) in the region of its shank (5) close to the supporting surface (6) includes a ring grove (8) forming an undercut, the ring grove having a diameter which is less than the inner diameter (28) of the bush (18) and an effective axial length (9) which is more than the length of the bush (18) in the through hole (17) of the component (2).

3. The assembly unit of claim 1, **characterised in that** the bush (18) at its side facing the head (4) of the screw (3) includes a collar (20) protruding in an outward direction, the collar being designed and arranged to limit the capability of pressing the bush (18) into the through hole (17) of the component.

4. The assembly unit of claim 3 or 4, **characterised in that** the screw (3) includes an impression (23) being designed as a continuous yielding channel, the impression being arranged close to the supporting surface (6) and being designed and arranged to prevent clamping of material of the bush (18) during tightening of the screw and to accommodate the collar (20).

5. The assembly unit of claim 3, **characterised in that** the bush (18) has a greater height than the component (2) in the region of the through hole (17) and the bush (18) at its side facing the head (4) of the screw (3) includes the collar (20) or protrusions designed and arranged to protrude beyond the through hole (17) in a radial direction.

6. The assembly unit of claim 1, **characterised in that** the bush (18) includes a plurality of protrusions (27) being directed in an inclined inward direction and being designed and arranged to be elastically deformable.

7. The assembly unit of claim 6, **characterised in that** each of the protrusions (27) of the bush (18) includes a chamfer for easier insertion of the screw (3).

8. The assembly unit of one of the claims 1 to 7; **characterised in that** the thread (10) of the shank (5) of the screw (3) has an axial length being less than the thickness of the component (2).

9. The assembly unit of claim 1, **characterised in that** the shank (5) of the screw (3) has a free end at which a centering element (15) is arranged, the centering element having a smaller outer diameter than the inner diameter (21) of the bush (18).

10. The assembly unit of claim 4, **characterised in that** the impression (23) close to the supporting surface (6) has an axial length being less than the axial length of the collar (20) of the bush (18) to attain a sealing effect in the tightened position of the assembly unit.

## Revendications

1. Unité de montage (1) composée d'un composant (2) et d'au moins une vis (3) ainsi que d'une douille (18) associée à chaque vis, le composant (2) présentant pour chaque vis (3) un trou débouchant (17), chaque vis (3) possédant une tête (4) servant à l'actionnement avec une surface d'appui (6) tournée vers le composant (2) et une tige (5) pourvue au moins en partie d'un filetage (10), et la douille (18) étant réalisée de manière à pouvoir être introduite dans le trou débouchant (17) et étant reliée de manière imperdable à la vis (3) et au composant (2), **caractérisée en ce que** la douille (18) est réalisée comme pièce moulée en matière plastique et peut être fixée dans le trou débouchant (17) du composant (2), avec des formations élastiques et liaisons par friction et/ou complémentarité de forme, et présente, pour la réception centrée de la vis (3), un diamètre intérieur (21) qui n'est que légèrement supérieur au diamètre extérieur (13) de la tige (5) de la vis (3) pourvue du filetage (10), et **en ce que** pour transmettre la force axiale en contournant la douille (18), la surface d'appui (6) de la vis (3) est réalisée de manière à venir en contact direct ou indirect avec le composant (2).

2. Unité de montage selon la revendication 1, **caractérisée en ce que** dans la zone de la tige (5), à la suite de la surface d'appui (6), la vis (3) présente une rainure annulaire (8) formant un détalonnage, dont le diamètre est inférieur au diamètre intérieur (28) de la douille (18) et dont la longueur axiale utile (9) est supérieure à la longueur de la douille (18) dans le trou débouchant (17) du composant (2).

3. Unité de montage selon la revendication 1 ou 2, **caractérisée en ce que** dans la zone d'extrémité tournée vers la tête (4) de la vis (3), la douille (18) comporte une collerette (20) faisant saillie vers l'extérieur qui forme une butée dans le trou débouchant (17), à l' introduction de la douille (18).

4. Unité de montage selon la revendication 3 ou 43, **caractérisée en ce que** pour empêcher que le matériau de la douille (18) ne se coince au serrage, la vis présente, à la suite de la surface d'appui (6), un renfoncement (23) périphérique réalisé comme une rainure de dégagement, qui reçoit la collerette (20) faisant saillie vers l'extérieur.

5. Unité de montage selon la revendication 3, **caractérisée en ce que** la douille (18) présente une plus grande hauteur de construction que le composant (2) dans la zone du trou débouchant (17), et présente, sur le côté tourné vers la tête (4) de la vis (3), la collerette (20) dépassant radialement du trou débouchant (17) ou des saillies correspondantes.

6. Unité de montage selon la revendication 1, **caractérisée en ce que** la douille (18) comporte plusieurs prolongements (27) se déformant élastiquement qui sont disposés dirigés obliquement vers l'intérieur.

7. Unité de montage selon la revendication 6, **caractérisée en ce que** les prolongements (27) dépassant vers l'intérieur de la douille (18) sont pourvus d'un biseau pour faciliter l'introduction de la vis (3).

8. Unité de montage selon l'une des revendications 1 à 7, **caractérisée en ce que** le filetage (10) de la tige (5) de la vis (3) présente une étendue axiale inférieure à l'épaisseur du composant (2).

9. Unité de montage selon la revendication 1, **caractérisée en ce que** la vis (3) comporte, à l'extrémité libre de sa tige (5), un embout de centrage (15) sans filetage qui présente un plus petit diamètre extérieur que le diamètre intérieur (21) de la douille (18).

10. Unité de montage selon la revendication 4, **caractérisée en ce que** le renfoncement (23) faisant suite à la surface d'appui (6) présente une étendue axiale moindre que la collerette (20) de la douille (18), de sorte qu'à l'état serré on obtient un effet d'étanchéité en ce point.
